# EUROPÄISCHE PATENTSCHRIFT

(11) **EP 2 101 948 B1**
(45) Veröffentlichungstag und Bekanntmachung des Hinweises auf die Patenterteilung: **14.05.2014**
(21) Anmeldenummer: 07819627.6
(22) Anmeldetag: 06.11.2007
(51) Int. Cl.: B23H 7/26, B23Q 1/00, B23Q 16/08

(54) **VORRICHTUNG UND VERFAHREN ZUM POSITIONIEREN EINES WERKZEUGS ODER WERKSTÜCKS AUF EINE WERKZEUGMASCHINE**
DEVICE AND METHOD FOR POSITIONING A TOOL OR WORKPIECE ON A MACHINE TOOL
DISPOSITIF ET PROCÉDÉ DE POSITIONNEMENT D'UN OUTIL OU D'UNE PIÈCE SUR UNE MACHINE-OUTIL

(30) Priorität: 17.11.2006 DE 102006054660
(43) Veröffentlichungstag der Anmeldung: 23.09.2009
(73) Patentinhaber: Hirschmann GmbH, 78737 Fluorn-Winzeln (DE)
(72) Erfinder: WEISSER, Norbert, 78737 Fluorn-Winzeln (DE)
(74) Vertreter: Göhring, Robert
(86) Internationale Anmeldenummer: PCT/EP2007/009608
(87) Internationale Veröffentlichungsnummer: WO 2008/058655

(56) Entgegenhaltungen:
- EP-A- 0 818 270
- DE-A1- 4 341 743
- DE-U1- 29 511 543
- FR-A- 2 448 835
- JP-A- 60 238 245

## Beschreibung

Die Erfindung betrifft eine Vorrichtung zum Positionieren eines Werkzeugs oder Werkstücks, wie z. B. einer Elektrode, auf eine Werkzeugmaschine, wie z. B. einer Erodiermaschine, und ein Werkzeug oder Werkstück gemäß dem Oberbegriff des Anspruchs 1 sowie ein Verfahren zur Positionierung eines solchen Werkzeuges oder Werkstückes auf eine Werkzeugmaschine.

Eine solche Vorrichtung ist z. B. aus der EP 0818 270 A1 bekannt.

Solche Vorrichtungen und Verfahren sind hinlänglich bekannt und beispielsweise von der Anmelderin in den offengelegten Patentanmeldungen DE 41 16 103 A1 sowie DE 199 07 100 A1 beschrieben.

Bei der DE 41 16 103 A1 ist ein an einer Funkenerosionsmaschine zu befestigender Palettenspanner und einer das Werkzeug, z. B. eine Elektrode, tragende Palette vorgesehen. Die Palette hat einen quadratischen Grundriss. Palettenspanner und Palette sind mit deckungsgleichen, prismatischen Nuten versehen, in welche zylindrische Zentrierrollen eingelegt sind. Die prismatischen Nuten der Palette bzw. die entsprechenden Nuten am Palettenspanner befinden sich in den Eckbereichen der quadratischen Palette bzw. des quadratischen Kupplungsteils des Palettenspanners und verlaufen diagonal. Diese Art einer Kupplungsvorrichtung zeichnet sich durch eine hohe Präzision und damit hohe Reproduzierbarkeit für die Werkzeugzentrierung auf. Zusätzlich ist die Steifigkeit gegenüber radialen Belastungen ohne Vergrößerung des Platzbedarfs und des Konstruktionsaufwandes erhöht.

Die in DE 199 07 100 A1 beschriebene Vorrichtung zum Positionieren eines Werkzeuges oder Werkstückes an einer Werkzeugmaschine weist einen Halter auf, der mit der Werkzeugmaschine verbunden ist. Der Halter enthält Aufnahmeeinrichtungen für dem Werkstück zugeordnete Zentrierstifte. Die Aufnahmeeinrichtungen bestehen aus zwei sich unter einem vorgegebenen Winkel schneidende Zentriernuten, in die die Zentrierstifte eingreifen.

Weitere Vorrichtungen zum Positionieren von Werkstücken oder Werkzeugen sind z. B. in EP 0 849 034 A1 sowie EP 0 111 092 A1 beschrieben.

Bei den bekannten Positioniervorrichtungen ist es notwendig, dass das Werkzeug bzw. Werkstück und der Halter exakt zueinander ausgerichtet sind. Hierfür müssen zwangsweise die einzelnen Aufnahmen bzw. Aufnahmeeinrichtungen am Werkstück exakt positioniert werden. Dies ist aufwändig und kostenintensiv. Darüber hinaus zeichnen sich die bisher bekannten Vorrichtungen durch einen verhältnismäßig hohen Platzbedarf aus.

Der vorliegenden Erfindung liegt die Aufgabe zugrunde, eine Vorrichtung zum Positionieren eines Werkzeugs oder Werkstücks an einer Werkzeugmaschine sowie ein Verfahren hierfür anzugeben, das sich durch eine einfache Anwendung auszeichnet und dennoch eine hochpräzise Justage des Werkstückes oder Werkzeuges an der Werkzeugmaschine erlaubt. Zusätzlich soll der notwendige Bauraum reduziert werden.

Diese Aufgabe wird für die Vorrichtung durch die Merkmale des Anspruchs 1 und für das Verfahren durch die Merkmale des Anspruchs 16 gelöst.

Die Erfindung beruht im Wesentlichen darauf, dass die Zentrierelemente am Werkzeug oder Werkstück als separate Teile eingesetzt und durch besondere Haltemittel dort fixiert und damit dauerhaft gehalten sind.

Das Verfahren zur Positionierung eines Werkzeugs oder Werkstücks, wie z. B. einer Elektrode, an einer Werkzeugmaschine, wie z. B. einer Senkerodiermaschine, weist die Verfahrensschritte des Anspruchs 16 auf.

Die grundlegende Idee besteht also darin, die Zentrierelemente am Werkzeug oder Werkstück als separate Teile einzusetzen, wobei diese separaten Teile noch etwas beweglich sind und erst anschließend durch geeignete Haltemittel dafür gesorgt wird, dass die Zentrierelemente dauerhaft und richtig fixiert sind. Im einfachsten Fall können die Haltemittel Klebemittel sein. Es ist aber auch denkbar, dass die Zentrierelemente in den Verfahren durch andere Mittel dauerhaft fixiert werden, beispielsweise durch Verspannen, Verpressen, Festklemmen oder dergleichen. Es muss lediglich gewährleistet sein, dass zu Beginn des Einsetzens die Zentrierelemente am Werkzeug oder Werkstück zunächst noch etwas beweglich sind und erst anschließend dauerhaft fixiert werden. Das dauerhafte Fixieren der Zentrierelemente erfolgt durch Aufsetzen des Werkzeugs oder Werkstücks mit eingesetzten, noch beweglichen Zentrierelementen auf einen Halter, der als Referenzhalter ausgebildet sein kann oder bereits am Werkzeug befestigt ist. Bei Aufsetzen des Werkzeuges oder Werkstückes auf den Halter bzw. Referenzhalter können sich die Zentrierelemente dank ihrer noch möglichen Beweglichkeit in die durch den Halter oder Referenzhalter bestimmte, exakte Position ausrichten, also z. B. verdrehen und/oder verschieben. Die so ausgerichteten Zentrierelemente werden nach ihrem exakten Ausrichten dann dauerhaft fixiert, z. B. dadurch, dass diese in der ausgerichteten Position festgeklebt werden.

In einer Ausführungsform der erfindungsgemäßen Vorrichtung weist der Halter der Werkzeugmaschine oder ein entsprechender Referenzhalter Aufnahmen für die Zentrierelemente auf. Diese Aufnahmen des Halters können als von einer Hauptfläche des Halters hervorspringende Grate, Leisten oder Rollen bzw. Kugeln ausgebildet sein, welche z. B. im rechten Winkel zueinander stehen. Geeignete Zentrierelemente verfügen über nutförmige Ausnehmungen, die in diese Grate, Leisten, Kugeln oder Rollen eingreifen. Diese Ausnehmungen in den Zentrierelementen, können z. B. prismenförmig, u-förmig oder v-förmig ausgebildet sein.

Es hat sich als zweckmäßig herausgestellt, vier Zentrierelemente vorzusehen, die im Winkel von 90° zueinander um eine Mittenachse des Werkzeugs oder Werkstücks zueinander versetzt angeordnet sind.

Wenn die als Grate oder Leisten ausgebildeten Aufnahmen des Halters von einer Mittenachse weg versetzt angeordnet sind, ist es notwendig, dass die Zentrierelemente im gleichen Abstand zur Mittenachse des Werkzeugs oder Werkstücks angeordnet sind.

In der Erfindung ist vorgesehen, dass für die Zentrierelemente Bohrungen im Werkstück oder Werkzeug vorhanden sind, in die die Zentrierelemente eingesteckt werden. Hierfür weist jedes Zentrierelement ein Steckteil auf zum Einstecken in die Bohrung sowie ein sich an das Steckteil anschließendes, im Durchmesser breiter ausgebildetes Greifteil. Das Greifteil eines Zentrierelementes ist, wie bereits erwähnt, z. B. mit einer prismenförmigen Ausnehmung versehen, welche in die hervorspringenden Grate oder Leisten des Halters eingreifen.

Es ist zweckmäßig, dass auf dem Werkzeug oder Werkstück Abstandsbolzen angeordnet sind, durch welche der axiale Abstand vom Werkzeug oder Werkstück zum Halter festgelegt ist. Vorzugsweise sind die Abstandsbolzen lösbar am Werkzeug oder Werkstück angeordnet, z. B. durch Verschrauben. Um eine möglichst plane Auflagefläche zu gewährleisten, weisen die Abstandsbolzen plane Oberseiten auf, auf denen der Halter aufsitzen kann.

Die erfindungsgemäße Vorrichtung und das erfindungsgemäße Verfahren zum Positionieren eines Werkzeugs oder Werkstücks an einer Werkzeugmaschine wird nachfolgend im Zusammenhang mit Figuren näher erläutert. Es zeigen:
- Figur 1: ein Werkstück, z. B. eine Elektrode, in Seitenansicht und Draufsicht,
- Figur 2: einen Halter, wie er an einer Werkzeugmaschine befestigt sein kann, in Draufsicht und Seitenansicht,
- Figur 3: den Halter von Figur 1 und das Werkstück von Figur 2 im zusammengesteckten Zustand, und
- Figur 4: verschiedene zeitliche Stationen beim Positionieren des Werkstückes auf den Halter nach dem erfindungsgemäßen Verfahren.

In den Figuren bezeichnen, sofern nicht anders angegeben, gleiche Bezugszeichen gleiche Teile mit gleicher Bedeutung.

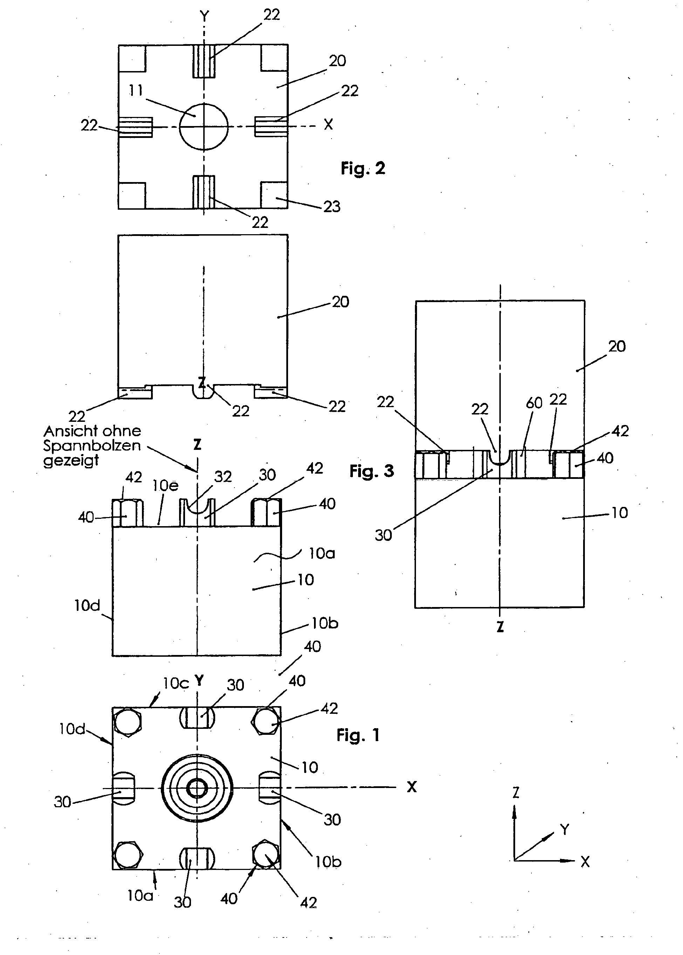

In Figur 1 ist ein blockartiges Werkzeug oder Werkstück 10 in Seitenansicht und Draufsicht dargestellt. Das Werkzeug oder Werkstück 10 kann zum Beispiel eine Elektrode für eine Erodiermaschine sein. Das Werkzeug oder Werkstück 10 weist vier Seitenflächen 10a, 10b, 10c und 10d auf sowie eine Oberseite 10e, die als Referenzfläche oder Stirnfläche dient.

Die Oberseite 10e liegt parallel zu einer Fläche, die durch die Koordinaten Y und X eines rechtwinkligen Koordinatensystems aufgespannt ist. Senkrecht zu diesen Koordinaten Y und X befindet sich die Koordinate Z.

Auf der Oberseite 10e dieses Werkzeuges 10 sitzen in noch näher zu erläuternder Art und Weise sowohl Zentrierelemente 30 als auch Abstandsbolzen 40. Wie aus der Draufsicht auf die Oberseite 10e von Figur 1 ersichtlich, befinden sich die Abstandsbolzen 40 an den vier Ecken des Werkzeuges 10. Die Zentrierelemente 30 sind zwischen diesen Abstandsbolzen 40 angeordnet. Die Abstandsbolzen 40 weisen eine plane Oberseite 42 auf, so dass ein Halter 20, der mit einer Werkzeugmaschine, zum Beispiel einer Senkerodiermaschine, verbunden ist, hier plan aufliegen kann. In der Mitte des Werkzeuges 10 sitzt ein Spannbolzen 60, der zum Beispiel hierfür in eine entsprechende Bohrung eingeschraubt ist.

Ein solcher Halter 20 ist in Figur 2 in Seitenansicht und Draufsicht dargestellt.

Im Ausführungsbeispiel von Figur 2 ist dieser Halter 20 ebenfalls blockartig ausgestaltet. Der Halter 20 könnte jedoch auch kreisförmig ausgebildet sein oder jede andere äußere Kontur aufweisen. Wichtig ist lediglich, dass der Halter 20 eine Hauptfläche 23 aufweist, auf die die planen Oberflächen 42 der Abstandsbolzen 40 des Werkzeuges 10 möglichst plan aufsitzen. Im Ausführungsbeispiel von Figur 2 befinden sich an den vier Ecken des Halters 20 Flächenelemente 23, die exakt zueinander in einer planen Ebene entsprechend den XY-Koordinaten sitzen. Der Halter 20 verfügt über eine zentrale Bohrung 21 zur Aufnahme des aus Figur 1 bekannten Spannbolzens 60. Zusätzlich verfügt der Halter 20 über vier Leisten oder Grate 22, die als Aufnahmen für die Zentrierelemente 30 dienen. Diese Leisten 22 sind kreuzförmig zueinander angeordnet. Die Grate oder Leisten 22 greifen in die U- oder prismenförmig gestalteten Ausnehmungen 32 der Zentrierelemente 30.

In Figur 3 ist das Werkzeug beziehungsweise Werkstück 10 auf den Halter 20 aufgesetzt gezeigt. Es ist deutlich zu erkennen, dass die planen Oberseiten 42 der Abstandsbolzen 40 auf den Flächen 23 des Halters 20 aufsitzen, wobei die Leisten oder Grate 22 des Halters 20 in die Zentrierelemente 30 eingreifen.

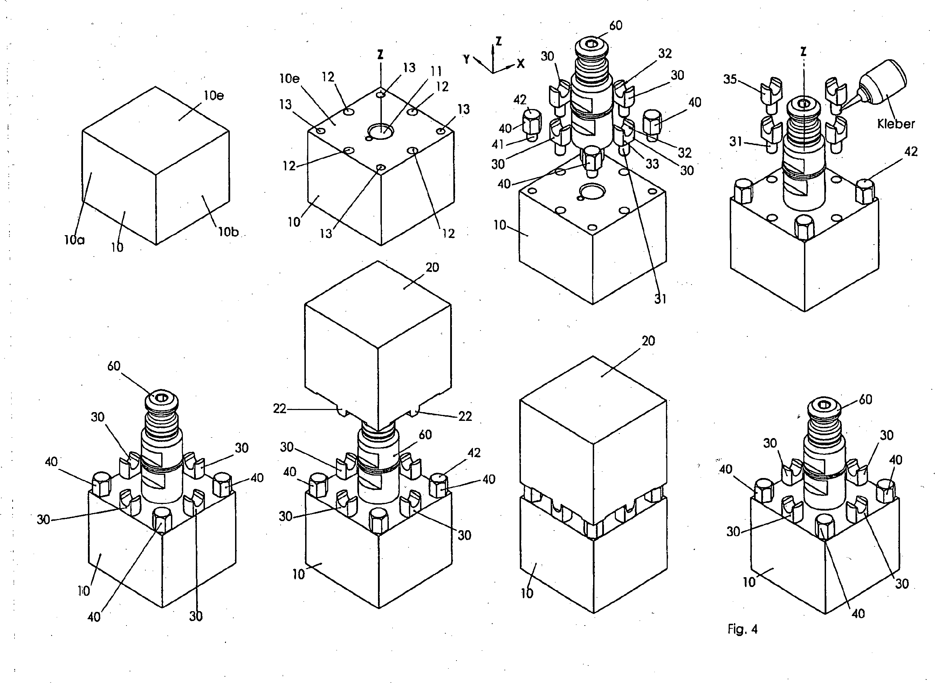

Es versteht sich, dass für ein präzises Ausrichten des Werkzeuges 10 auf dem Halter 20 ein korrekter Sitz der Zentrierelemente 30 erforderlich ist. Wie ein solcher korrekter Sitz der Zentrierelemente und deren Ausrichtung erreicht werden kann, wird anhand der Darstellung von Figur 4 deutlich.

In Figur 4 ist links oben das Werkzeug 10, zum Beispiel eine Elektrode, dargestellt, die noch nicht geeignet ist, auf eine Werkzeugmaschine, zum Beispiel eine Senkerodiermaschine aufgespannt zu werden. In Figur 4 rechts unten ist dagegen das gleiche Werkzeug 10 gezeigt mit eingesetzten Zentrierelementen 30, Abstandsbolzen 40 sowie Spannbolzen 60, wie es an eine Werkzeugmaschine aufgespannt werden kann. Der Herstellweg des Werkzeuges 10 wird in Figur 4 von links oben nach rechts unten erläutert. Die bereits bekannten Bezugszeichen werden für die gleichen Teile weiter verwendet. Auch das gleiche Koordinatensystem XYZ findet weiter Verwendung.

Ausgehend von dem in Figur 4 links oben dargestellten, noch unbearbeiteten Werkzeug 10 werden von der Stirnseite 10e verschiedene Bohrungen in das Werkzeug 10 eingebracht. Zunächst wird eine verhältnismäßig große, zentrale Bohrung 11 in das Werkzeug 10 eingebracht zur Aufnahme eines an sich bekannten Spannbolzens 60. Die Bohrung 11 ist vorzugsweise eine Schraubbohrung. Im Bereich der vier Ecken der oberen Stirnseite 10e des Werkzeuges 10 sind Bohrungen 13, vorzugsweise Schraubbohrungen, zur Aufnahme der bereits erwähnten Abstandsbolzen 40 eingearbeitet. Zwischen den Bohrungen 13 für die Abstandsbolzen 40 befinden sich Bohrungen 12 für die Zentrierelemente 30. Die Zentrierelemente 30 und Abstandsbolzen 40 werden in die hierfür vorgesehenen Bohrungen 12 und 13 eingesetzt. Die Abstandsbolzen 40 werden in die Bohrungen 13 z. B. eingeschraubt. Hierfür weisen die Abstandsbolzen 40 einen Gewindestift 41 auf, der mit dem Gewinde in der Bohrung 13 zusammenwirkt. Die Abstandsbolzen 40 werden zweckmäßigerweise mit einem Schraubenschlüssel in die Bohrungen 13 eingeschraubt. Zweckmäßigerweise werden die Abstandsbolzen 40 mit einem vorgegebenen Drehmoment angezogen. Die planen Oberflächen 42 der Abstandsbolzen 40 liegen alle bei korrekter Montage idealer Weise auf einer gemeinsamen Ebene, die parallel zu den Koordinaten XY aufgespannt ist. In die mittige Bohrung 11 wird der Spannbolzen 60 eingesetzt beziehungsweise eingeschraubt.

Die Bohrungen 12 dienen zur Aufnahme der Zentrierelemente 30. Hierfür weisen die Zentrierelemente 30 jeweils ein unteres Steckteil 31 auf, das in die Bohrungen 12 eingesetzt werden kann. An dieses Steckteil 31 jedes Zentrierelements 30 fügt sich ein verbreiterter Abschnitt an, wobei idealer Weise der Übergang vom Steckteil 31 zu diesem verbreiterten Anschnitt, der eine U-förmige oder prismenförmige Ausnehmung 32 aufweist, rechtwinklig ist, damit das Zentrierelement 30 gut auf der Stirnseite 10e des Werkzeuges 10 aufsitzen kann. Die Bohrungen 12 im Werkzeug 10 sind etwas größer gestaltet als der Durchmesser der Steckteile 31 der Zentrierelemente 30, so dass die Zentrierelemente 30 nach dem Einstecken in die entsprechenden Bohrungen 12 noch in Umfangsrichtung verdrehbar sowie etwas in XY-Richtung verschiebbar sind.

Wie in Figur 4 rechts oben dargestellt, wird beim Einsetzen der Steckteile 31 der Zentrierelemente 30 in die Bohrungen 12 Klebemittel verwendet. Beispielsweise wird vor dem Einstecken der Steckteile 31 in die Bohrungen 12 etwas Klebemittel getropft. Als Klebemittel kann beispielsweise ein Schraubensicherungskleber verwendet werden.

In Figur 4 links unten sind sowohl die Spannschraube 60 als auch die Abstandsbolzen 40 sowie die Zentrierelemente 30 in das Werkzeug 10 eingesetzt dargestellt. Es ist anzumerken, dass das Klebemittel noch nicht ausgehärtet ist und deshalb die Zentrierelemente 30 noch bewegbar, d. h. verdrehbar und verschiebbar sind.

Um die Zentrierelemente 30 in ihre endgültige Lage zu bringen, wird ein exakt gearbeiteter Halter 20, zum Beispiel ein Referenzhalter, zur Verfügung gestellt, dessen Grate oder Leisten 22 exakt platziert sind. Dieser Halter 20 wird auf die grob vorausgerichteten Zentrierelemente 30 aufgesetzt. Unter grob ausgerichtet ist dabei zu verstehen, dass die U-förmigen beziehungsweise prismenförmigen Ausnehmungen 32 der Zentrierelemente 30 bereits in etwa so ausgerichtet sind, dass die Leisten 22 in diese Ausnehmungen 32 der Zentrierelemente 30 eingreifen können.

Beim Absenken des Halters 20 in Richtung Werkzeug 10 beginnen die Leisten 22 in die Ausnehmungen 32 der Zentrierelemente 30 einzugreifen. Auf Grund der U-förmigen oder prismenförmigen Gestaltung der Ausnehmungen 32 richten sich die Zentrierelemente 30 langsam bei zunehmendem Absetzen des Halters 20 in Richtung Werkstück 10 exakt aus. Sobald der Halter 20 auf die planen Oberflächen 42 der Abstandsbolzen 40 aufsitzt, ist die tiefste Position des Halters 20 erreicht. Es wird dann so lange gewartet, bis der Kleber aushärtet. Dies kann zum Beispiel wenige Minuten dauern. Nachdem der Kleber ausgehärtet ist, kann der Referenzhalter 20 abgenommen werden, weil die Zentrierelemente 30 einerseits exakt ausgerichtet sind und andererseits auf Grund des Aushärtens des Klebemittels nicht mehr verdreht oder verschoben werden können. Damit ist aber ein Werkzeug 10 bereitgestellt, das auf diese Art und Weise exakt ausgerichtete Zentrierelemente 30 aufweist, so dass das Werkzeug 10 auf die Werkzeugmaschine gespannt werden kann.

### Bezugszeichenliste

- 10: Werkzeug, Werkstück, Elektrode
- 10a: Seitenwand
- 10b: Seitenwand
- 10c: Seitenwand
- 10d: Seitenwand
- 10e: Referenzfläche/Stirnfläche
- 11: zentrale Bohrung
- 12: Bohrung für Zentrierelemente
- 13: Bohrung für Abstandsbolzen

- 20: Halter
- 21: Bohrung
- 22: Aufnahme
- 23: Hauptfläche
- 30: Zentrierelement
- 31: Steckteil
- 32: prismenförmige Ausnehmung
- 33: flache Wandung
- 35: Greifteil
- 40: Abstandsbolzen
- 41: Gewindestift
- 42: plane Oberseite

- 60: Spannbolzen
- 70: Referenzhalter

- Z: Mittenachse
- X: Richtung
- Y: Richtung

## Patentansprüche

1. Vorrichtung zum Positionieren eines Werkzeuges oder Werkstückes (10) auf eine Werkzeugmaschine mit einem Halter (20), der mit der Werkzeugmaschine verbunden ist, und Werkzeug oder Werkstück, wobei das Werkzeug oder das Werkstück (10) Bohrungen (12) zur Aufnahme von Zentrierelementen aufweist und einen zentralen Spannbolzen (60) und Zentrierelemente (30) mit Steckteil (31) aufweist, welche als separate Teile mit dem Werkzeug oder Werkstück (10) feststehend verbunden sind, wobei der Halter (20) eine zentrale Bohrung (11) zur Aufnahme des Spannbolzens (60) aufweist,
**dadurch gekennzeichnet, dass** die Bohrungen (12) für die Zentrierelemente etwas größer als die Steckteile (31) der Zentrierelemente (30) ausgebildet sind, um ein Ausrichten der Zentrierelemente (30) in den Bohrungen zu erlauben, dass die Zentrierelemente (30) am Werkzeug oder Werkstück (10) durch Klebemittel fixiert und feststehend verbunden gehalten sind, und dass Abstandsbolzen(40) auf dem Werkzeug oder Werkstück (10) angeordnet sind.

2. Vorrichtung nach Anspruch 1,
**dadurch gekennzeichnet, dass** das Werkzeug oder Werkstück (10) eine Elektrode ist, welche an einer Funkenerosionsmaschine positionierbar ist.

3. Vorrichtung nach Anspruch 1 oder 2,
**dadurch gekennzeichnet, dass** die Aufnahmen (22) als hervorragende Elemente, insbesondere Grate, Leisten oder Rollen ausgebildet sind.

4. Vorrichtung nach einem der Ansprüche 1 bis 3,
**dadurch gekennzeichnet, dass** vier Zentrierelemente (30) vorgesehen sind, welche im Winkel von 90° zueinander um eine Mittenachse (Z) des Werkzeuges oder Werkstückes (10) zueinander versetzt angeordnet sind.

5. Vorrichtung nach Anspruch 4,
**dadurch gekennzeichnet, dass** sich die Zentrierelemente(30) jeweils im gleichen Abstand zur Mittenachse (Z) des Werkzeuges oder des Werkstückes (10) befinden.

6. Vorrichtung nach einem der Ansprüche 1 bis 5,
**dadurch gekennzeichnet, dass** im Werkzeug oder Werkstück (10) Bohrungen (12) für die Zentrierelemente (30) vorgesehen sind, in welche die Zentrierelemente (30) einsteckbar sind, wobei jedes Zentrierelement (30) ein Steckteil (31) aufweist zum Einstecken in die Bohrung (12) sowie ein sich an das Steckteil (31) anschließendes, im Durchmesser breiter ausgebildetes Greifteil (35), wobei das Greifteil (35) eines Zentrierelements (30) eine prismenförmige Ausnehmung (32) aufweist, welche in den hervorspringenden Aufnahmen (22) des Halters (20) eingreift.

7. Vorrichtung nach Anspruch 6,
**dadurch gekennzeichnet, dass** das Greifteil (35) eines Zentrierelements (30) zwei parallel zueinander an der Außenseite des Zentrierelements (30) liegende, flache Wandungen (33) aufweist.

8. Vorrichtung nach Anspruch 7,
**dadurch gekennzeichnet, dass** das Werkzeug oder Werkstück (10) Seitenwände (10a, 10b) aufweist und eine flache Wandung (33) eines Zentrierstiftes (30) bei korrekter Positionierung des Zentrierstiftes (30) auf der gleichen Ebene wie eine Seitenwand (10a, 10b) des Werkzeuges oder Werkstückes (10) liegt.

9. Vorrichtung nach einem der Ansprüche 1 bis 8,
**dadurch gekennzeichnet, dass** auf dem Werkzeug oder Werkstück (10) Abstandsbolzen (40) angeordnet sind, durch welche der axiale Abstand von Werkzeug oder Werkstück (10) zum Referenzhalter (20) festgelegt ist.

10. Vorrichtung nach Anspruch 9,
**dadurch gekennzeichnet, dass** die Abstandsbolzen (40) lösbar am Werkzeug oder Werkstück (10) angeordnet sind.

11. Vorrichtung nach Anspruch 10,
**dadurch gekennzeichnet, dass** die Abstandsbolzen (40) in das Werkzeug oder Werkstück (10) geschraubt sind.

12. Vorrichtung nach einem der Ansprüche 10 oder 11,
**dadurch gekennzeichnet, dass** die Abstandsbolzen (40) plane Oberseiten (42) aufweisen.

13. Vorrichtung nach einem der Ansprüche 1 bis 12,
**dadurch gekennzeichnet, dass** das Werkzeug oder Werkstück (10) eine zentrale Bohrung (11) aufweist, in welcher ein Spannbolzen (60) sitzt.

14. Vorrichtung nach einem der Ansprüche 1 bis 13,
**dadurch gekennzeichnet, dass** ein Referenzhalter (20) vorgesehen ist mit vier Aufnahmen (22) für die Zentrierelemente (30) des Werkstückes oder Werkzeuges (10).

15. Vorrichtung nach einem der Ansprüche 1 bis 14,
**dadurch gekennzeichnet, dass** die Aufnahmen (22) Zentriernasen sind.

16. Verfahren zur Positionierung eines Werkzeuges oder Werkstückes (10) an eine Werkzeugmaschine mit folgenden Verfahrensschritten:
- Bereitstellen eines Referenzhalters (20) mit Aufnahmen (22) für Zentrierelemente (30), welche an einem Werkzeug oder Werkstück (10) festgelegt sind,
- Bereitstellen eines Werkzeuges oder Werkstückes (10) mit einer zentralen Bohrung (11) zur Aufnahme eines Spannbolzens (60) und mit Bohrungen (12) zur Aufnahme von Zentrierelementen (30),
- Einsetzen des Spannbolzens (60) in die zentrale Bohrung (11),
- Einsetzen der Zentrierelemente (30) in die Bohrungen (12) unter Verwendung von Haltemittel, wobei die Zentrierelemente (30) noch beweglich sind,
- Aufsetzen des Werkzeuges oder Werkstückes (10) samt eingesetzten Zentrierelementen (30) auf den Referenzhalter (20), wobei die Zentrierelemente (30) in die Aufnahmen (22) des Referenzhalters (20) greifen und sich dort während des Aufsetzens ausrichten,
- dauerhaftes Fixieren der Zentrierelemente (30),
- Abnahme des Werkzeuges oder Werkstückes (10) vom Referenzhalter (20) und anschließendes Einspannen in den Halter der Werkzeugmaschine.

17. Verfahren nach Anspruch 16,
**dadurch gekennzeichnet, dass** die Zentrierelemente (30) beim Einstecken in die Bohrungen (12) des Werkzeuges oder Werkstückes (10) bereits manuell vorausgerichtet sind.

18. Verfahren nach Anspruch 16 oder 17,
**dadurch gekennzeichnet, dass** die Haltemittel Klebemittel sind, wobei das dauerhafte Fixieren der Zentrierelemente (30) durch Aushärten des Klebemittels erfolgt.

## Claims

1. An apparatus for positioning a tool or a workpiece (10) on a machine tool with a holding means (20) which is connected to the machine tool, and tool or workpiece, wherein the tool or the workpiece (10) has bores (12) for receiving centring elements and has a central tensioning bolt (60) and centring elements (30) with an insertion part (31) which are connected as separate parts to the tool or the workpiece (10) in a stationary manner, wherein the holding means (20) has a central bore (11) for receiving the tensioning bolt (60), **characterized in that** the bores (12) for the centring elements are made slightly larger than the insertion parts (31) of the centring elements (30) in order to permit alignment of the centring elements (30) in the bores, the centring elements (30) are held in a fixed and stationarily connected manner on the tool or the workpiece (10) by adhesives, and spacer pins (40) are arranged on the tool or the workpiece (10).

2. An apparatus according to claim 1, **characterized in that** the tool or the workpiece (10) is an electrode which is capable of being positioned on a spark erosion machine.

3. An apparatus according to claim 1 or 2, **characterized in that** the receiving means (22) are designed in the form of projecting elements, in particular ridges, strips or rolls.

4. An apparatus according to any one of claims 1 to 3, **characterized in that** four centring elements (30) are provided which are arranged offset with respect to one another at an angle of 90° with respect to one another abcut a central axis (Z) of the tool or the workpiece (10).

5. An apparatus according to claim 4, **characterized in that** the centring elements (30) are situated at an equal distance in each case from the central axis (Z) of the tool or the workpiece (10).

6. An apparatus according to any one of claims 1 to 5, **characterized in that** the tool or the workpiece (10) has provided in it bores (12) for the centring elements (30), into which the centring elements (30) are capable of being inserted, wherein each centring element (30) has an insertion part (31) for insertion into the bore (12) as well as a gripping part (35) adjoining the insertion part (31) and made wider in diameter, wherein the gripping part (35) of a centring element (30) has a prismatic recess (32) which engages in the projecting receiving means (22) of the holding means (20).

7. An apparatus according to claim 6, **characterized in that** the gripping part (35) of a centring element (30) has two flat walls (33) arranged parallel to each other on the outer side of the centring element (30).

8. An apparatus according to claim 7, **characterized in that** the tool or the workpiece (10) has lateral walls (10a, 10b), and a flat wall (33) of a centring pin (30) rests on the same plane as a lateral wall (10a, 10b) of the tool or the workpiece (10) when the centring pin (30) is correctly positioned.

9. An apparatus according to any one of claims 1 to 8, **characterized in that** spacer pins (40), by which the axial distance of the tool or the workpiece (10) from the reference holding means (20) is fixed, are arranged on the tool or the workpiece (10).

10. An apparatus according to claim 9, **characterized in that** the spacer pins (40) are arranged on the tool or the workpiece (10) in a detachable manner.

11. An apparatus according to claim 10, **characterized in that** the spacer pins (40) are screwed into the tool or the workpiece (10).

12. An apparatus according to any one of claims 10 or 11, **characterized in that** the spacer pins (40) have plane top sides (42).

13. An apparatus according to any one of claims 1 to 12, **characterized in that** the tool or the workpiece (10) has a central bore (11) in which a tensioning bolt (60) is mounted.

14. An apparatus according to any one of claims 1 to 13, **characterized in that** a reference holding means (20) is provided which has four receiving means (22) for the centring elements (30) of the workpiece or the tool (10).

15. An apparatus according to any one of claims 1 to 14, **characterized in that** the receiving means (22) are centring stubs.

16. A method of positioning a tool or a workpiece (10) on a machine tool with the following method steps:
- making available a reference holding means (20) with receiving means (22) for centring elements (30) which are fixed to a tool or a workpiece (10),
- making available a tool or a workpiece (10) with a central bore (11) for receiving a tensioning bolt (60) and with bores (12) for receiving centring elements (30),
- inserting the tensioning bolt (60) into the central bore (11),
- inserting the centring elements (30) into the bores (12) whilst using holding means, wherein the centring elements (30) are still movable,
- positioning the tool or the workpiece (10) together with the inserted centring elements (30) on the reference holding means (20), wherein the centring elements (30) engage in the receiving means (22) of the reference holding means (20) and are aligned there during the positioning,
- permanently fixing the centring elements (30),
- removing the tool or the workpiece (10) from the reference holding means (20) and subsequently clamping it in the holding means of the machine tool.

17. A method according to claim 16, **characterized in that** the centring elements (30) are already aligned manually beforehand during the insertion into the bores (12) of the tool or the workpiece (10).

18. A method according to claim 16 or 17, **characterized in that** the holding means are adhesives, wherein the permanent fixing of the centring elements (30) is carried out by curing the adhesive.

## Revendications

1. Dispositif de positionnement d'un outil ou d'une pièce à usiner (10) sur une machine outil comportant un élément de maintien (20) qui est relié à la machine outil et l'outil ou la pièce à usiner, l'outil ou la pièce à usiner (10) comportant des perçages (12) de réception d'éléments de centrage, un boulon de serrage central (60) et des éléments de centrage (30) équipés d'une partie d'enfichage (31), qui sont reliés solidairement entant qu'élément séparés avec l'outil ou la pièce à usiner (10), l'élément de maintien (20) comportant un perçage central (11) pour la réception du boulon de serrage (60),
**caractérisé en ce que**
les perçages (12) pour les éléments de centrage sont essentiellement plus grands que la partie d'enfichage (31) de l'élément de centrage (30) pour permettre une orientation des éléments de centrage (30) dans les perçages, les éléments de centrage (30) sont fixés et reliés rigidement à l'outil ou à la pièce à usiner (10) par l'intermédiaire de moyens adhésifs et des boulons d'écartement (40) sont montés sur l'outil ou sur la pièce à usiner (10).

2. Dispositif conforme à la revendication 1,
**caractérisé en ce que**
l'outil ou à la pièce à usiner (10) est une électrode susceptible d'être positionnée sur une machine d'usinage par étincelage.

3. Dispositif conforme à la revendication 1 ou 2,
**caractérisé en ce que**
les logements de réception (22) sont réalisés sous la forme d'éléments en saillie, en particulier d'arêtes saillantes, de barrettes ou de rouleaux.

4. Dispositif conforme à l'une des revendications 1 à 3,
**caractérisé en ce qu'**
il est prévu quatre éléments de centrage (30) qui sont décalés d'un angle de 90° les uns par rapport aux autres autours de l'axe médian (Z) de l'outil ou de la pièce à usiner (10).

5. Dispositif conforme à la revendication 4,
**caractérisé en ce que**
les éléments de centrage (30) sont respectivement situés à la même distance de l'axe médian (Z) de l'outil ou de la pièce à usiner (10).

6. Dispositif conforme à l'une des revendications 1 à 5,
**caractérisé en ce que**
dans l'outil ou la pièce à usiner (10) sont prévus des perçages dans lesquels peuvent être enfichés les éléments de centrage (30), chacun des éléments de centrage (30) comportant une partie d'enfichage (31) pour permettre son enfichage dans le perçage (12) ainsi qu'une partie de préhension (35) se raccordant à la partie d'enfichage (31) et ayant un diamètre supérieur, la partie de préhension (35) d'un élément de centrage (30) comportant un évidement prismatique (32) qui vient en prise dans le logement en saillie (22) de l'élément de maintien (20).

7. Dispositif conforme à la revendication 6,
**caractérisé en ce que**
la partie de préhension (35) d'un élément de centrage (30) comporte deux parois planes (33) s'étendant parallèlement l'une à l'autre sur la face externe de l'élément de centrage (30).

8. Dispositif conforme à la revendication 7,
**caractérisé en ce que**
l'outil ou la pièce à usiner (10) comporte des parois latérales (10a, 10b) et une paroi plane (33) d'une broche de centrage (30) est située lors d'un positionnement correct de la broche de centrage (30) sur le même plan qu'une paroi latérale (10a, 10b) de l'outil ou de la pièce à usiner (10).

9. Dispositif conforme à l'une des revendications 1 à 8,
**caractérisé en ce que**
sur l'outil ou la pièce à usiner (10) sont montés des boulons d'écartement (40) par l'intermédiaire desquels la distance axiale de l'outil ou de la pièce à usiner (10) à un élément de maintien de référence (20) est fixée.

10. Dispositif conforme à la revendication 9,
**caractérisé en ce que**
les boulons d'écartement (40) sont montés amovibles sur l'outil ou sur la pièce à usiner (10).

11. Dispositif conforme à la revendication 10,
**caractérisé en ce que**
les boulons d'écartement (40) sont vissés dans l'outil ou la pièce à usiner (10).

12. Dispositif conforme à l'une des revendications 10 et 11,
**caractérisé en ce que**
les boulons d'écartement (40) comportent des faces supérieures planes (42).

13. Dispositif conforme à l'une des revendications 1 à 12,
**caractérisé en ce que**
l'outil ou la pièce à usiner (10) comporte un perçage central (11) dans laquelle est logé un boulon de serrage (60).

14. Dispositif conforme à l'une des revendications 1 à 13,
**caractérisé en ce qu'**
il est prévu un élément de maintien de référence (20) comprenant quatre logements de réception (22) pour les éléments de centrage (30) de l'outil ou de la pièce à usiner (10).

15. Dispositif conforme à l'une des revendications 1 à 14,
**caractérisé en ce que**
les logements de réception (22) sont des becs de centrage.

16. Dispositif de positionnement d'un outil ou d'une pièce à usiner (10) sur une machine outil comportant les étapes suivantes consistant à :
- préparer un élément de maintien de référence (20) comportant des logements de réception (22) pour des éléments de centrage (30) qui sont fixés sur un outil ou sur une pièce à usiner (10),
- préparer un outil ou une pièce à usiner (10) comportant un perçage central (11) pour la réception d'un boulon de serrage (60) et des perçages (12) pour la réception d'élément de centrage (30),
- introduction du boulon de serrage (60) dans le perçage central (11),
- introduction des éléments de centrage (30) dans les perçages (12) en utilisant des moyens de maintien, les éléments de centrage (30) étant encore mobiles,
- positionner l'outil ou la pièce à usiner (10) y compris les éléments de centrage (30) mis en place sur l'élément de maintien de référence (20), les éléments de centrage (30) venant en prise dans les logements de réception (22) de l'élément de maintien de référence (20) et s'y orientant pendant la mise en place,
- fixation permanente des éléments de centrage (30),
- extraction de l'outil ou de la pièce à usiner (10) de l'élément de maintien de référence (20) puis serrage dans l'élément de maintien de la machine outil.

17. Procédé conforme à la revendication 16,
**caractérisé en ce que**
les éléments de centrage (30) sont déjà préalablement orientés manuellement lors de leur enfichage dans les perçages (12) de l'outil ou de la pièce à usiner (10).

18. Procédé conforme à la revendication 16 ou 17,
**caractérisé en ce que**
les éléments de maintien sont des moyens adhésifs, la fixation permanente des éléments de centrage (30) étant effectuée par durcissement des moyens adhésifs.
